# DEMANDE DE BREVET EUROPEEN

(11) **EP 0 957 380 A1**
(43) Date de publication de la demande: **17.11.1999**
(21) Numéro de dépôt: 99401057.7
(22) Date de dépôt: 30.04.1999
(51) Int. Cl.: G02B 6/36, G02B 6/38, G02B 6/32

(54) **Connecteur optique**

(30) Priorité: 12.05.1998 FR 9805939
(71) Demandeur: Amphenol Socapex, 74311 Thyez Cedex (FR)
(72) Inventeur: Pouyez, Philippe, 95100 Argenteuil (FR); Doit, Stéphane, 74400 Chamonix (FR); Kayoun, Pierre, 92100 Boulogne (FR)
(74) Mandataire: Dronne, Guy

(57) **Abrégé**

L'invention concerne un dispositif de positionnement de précision de l'extrémité de fibres optiques (14) en faisceau.

Il comprend un corps massif monobloc allongé (10), dans lequel est percé un évidement (12) le traversant de part en part selon le sens de la longueur, la section dudit évidement dans des plans perpendiculaires à la longueur étant une courbe fermée comprenant un premier côté(18) et un deuxième côté (20) s'étendant sensiblement parallèlement l'un à l'autre, au moins un desdits côtés ayant la forme d'une ondulation constituée par une alternance de crêtes (26), et de creux (28), l'espace (36) limité par un creux (18) et la partie de l'autre côté qui lui fait face étant apte à recevoir une fibre avec un faible jeu, les espaces (36') correspondants à une crête (26) n'étant pas aptes à recevoir une fibre.

## Description

La présente invention concerne le domaine des connecteurs pour fibres optiques.

De façon plus précise, l'invention concerne un dispositif de positionnement de l'extrémité de fibres optiques appartenant notamment à un faisceau en ruban ainsi que l'application d'un tel dispositif de positionnement à la réalisation d'un connecteur optique et à la réalisation d'un dispositif d'épissurage de plusieurs faisceaux de fibres optiques.

On sait qu'il existe de plus en plus de systèmes performants dans lesquels l'information est transmise sous forme de signaux optiques. Pour cela, on a développé des fibres optiques présentant des performances de plus en plus élevées ainsi que des composants optiques actifs d'émission et de réception en nombre de plus en plus grand. En particulier, on a développé des connecteurs optiques qui permettent de raccorder entre eux deux faisceaux de fibres optiques ou de raccorder un faisceau de fibres optique à un appareil optique (émetteur, récepteur, atténuateur, capteur, etc.).

Les connecteurs optiques sont des composants qui permettent de réaliser un positionnement relatif et absolu très précis des extrémités des fibres optiques d'un faisceau de fibres optiques. Pour obtenir ce positionnement très précis, les connecteurs optiques comportent en général un grand nombre de pièces usinées avec une très grande précision afin d'obtenir le positionnement requis des extrémités des fibres optiques. Il en résulte que le coût de fabrication de tels connecteurs est relativement élevé. Cette situation économique est acceptable lorsque les connecteurs font partie de systèmes relativement sophistiqués dont le coût est lui-même relativement élevé.

En revanche, dans le cadre du développement de systèmes optiques moins élaborés, le coût de fabrication des connecteurs optiques devient un point critique quant à l'économie de tels systèmes.

Il existe donc un réel besoin de disposer de connecteurs optiques qui, tout en assurant un positionnement acceptable des extrémités des fibres optiques, soient d'un coût de fabrication plus réduit et qui donc soient compatibles avec des techniques de fabrication permettant des productions en grandes séries.

Un objet de la présente invention est de fournir un dispositif de positionnement de l'extrémité de fibres optiques d'un faisceau qui soit d'un coût de fabrication réduit.

Pour atteindre ce but selon l'invention, le dispositif de positionnement de l'extrémité de fibres optiques d'un faisceau se caractérise en ce qu'il comprend un corps massif monobloc allongé, dans lequel est percé un évidement le traversant de part en part selon le sens de la longueur, la section dudit évidement dans des plans perpendiculaires à la longueur étant une courbe fermée comprenant un premier côté et un deuxième côté s'étendant sensiblement parallèlement l'un à l'autre, au moins un desdits côtés ayant la forme d'une ondulation constituée par une alternance de crêtes, et de creux, l'espace limité par un creux et la partie de l'autre côté qui lui fait face étant apte à recevoir une fibre avec un faible jeu, les espaces correspondant à une crête n'étant pas aptes à recevoir une fibre.

On comprend que du fait que le dispositif de positionnement est essentiellement constitué par un corps monobloc dans lequel est ménagé un évidement dont la définition est engendrée par des génératrices parallèles entre elles cela permet la fabrication de ce corps par des techniques d'extrusion ou de moulage d'un matériau plastique ou métallique, ce qui permet bien sûr de réduire considérablement le coût de leur fabrication.

On comprend de plus que l'évidement est constitué, en section droite, par une alternance d'espaces aptes à recevoir une fibre et d'espaces qui ont des dimensions ne permettant pas de recevoir une fibre. L'introduction des extrémités des fibres optiques dans le dispositif de positionnement en est donc grandement simplifié.

Selon un mode de réalisation préféré, le deuxième côté de la section droite de l'évidement est également constitué par une alternance de crêtes et de creux dans laquelle les creux du premier côté sont en regard des crêtes du deuxième côté.

Selon ce mode préféré de réalisation, on comprend que, tout en assurant la même qualité de positionnement, l'évidement présente des dimensions en section droite qui sont plus importantes et qui autorisent l'utilisation d'un noyau d'extrusion ou de moulage dont les caractéristiques mécaniques sont améliorées et donc dont l'utilisation est rendue bien plus aisée.

L'invention concerne également l'application du dispositif de positionnement à la réalisation d'un élément de connecteur optique qui se caractérise en ce que ledit corps présente une face de connexion avec un autre élément de connecteur, et en ce que ladite face est munie de moyens de positionnement par rapport à l'autre élément de connecteur.

L'invention concerne encore l'application du dispositif de positionnement défini ci-dessus à la réalisation d'un bloc d'épissure entre au moins deux rubans de fibres optiques, qui se caractérise en ce que ledit corps comprend des première et deuxième faces d'extrémité dans lesquelles débouche ledit évidement et des moyens de solidarisation de chaque extrémité des deux faisceaux de fibres optiques à raccorder avec le corps du bloc d'épissure.

D'autres caractéristiques et avantages de l'invention apparaîtront mieux à la lecture de la description qui suit de plusieurs modes de réalisation de l'invention donnés à titre d'exemples non limitatifs. La description se réfère aux figures annexées sur lesquelles :
- la figure 1 est une vue en coupe transversale du principe de réalisation du dispositif d'alignement de fibres optiques ;
- la figure 2 est une vue de face d'un élément de connecteur optique selon un premier mode réalisation ;
- la figure 3 est une vue de côté de l'élément de connecteur de la figure 2 ;
- la figure 4 est une variante de réalisation du connecteur de la figure 2 ;
- la figure 5 est une vue de face d'un élément de connecteur optique apte à raccorder plusieurs faisceaux de fibres optiques ;
- la figure 6 est une vue de face d'une autre variante de réalisation d'un connecteur optique à plusieurs faisceaux de fibres optiques ;
- les figures 7a et 7b illustrent un mode de réalisation d'éléments de connecteurs optiques, dans lequel les fibres optiques sont associées à une lentille optique ;
- la figure 8 montre un mode de réalisation d'un dispositif d'épissure pour raccorder deux faisceaux de fibres optiques du type ruban ; et
- la figure 9 est une vue d'un dispositif d'épissure pour raccorder plusieurs faisceaux optiques en ruban.

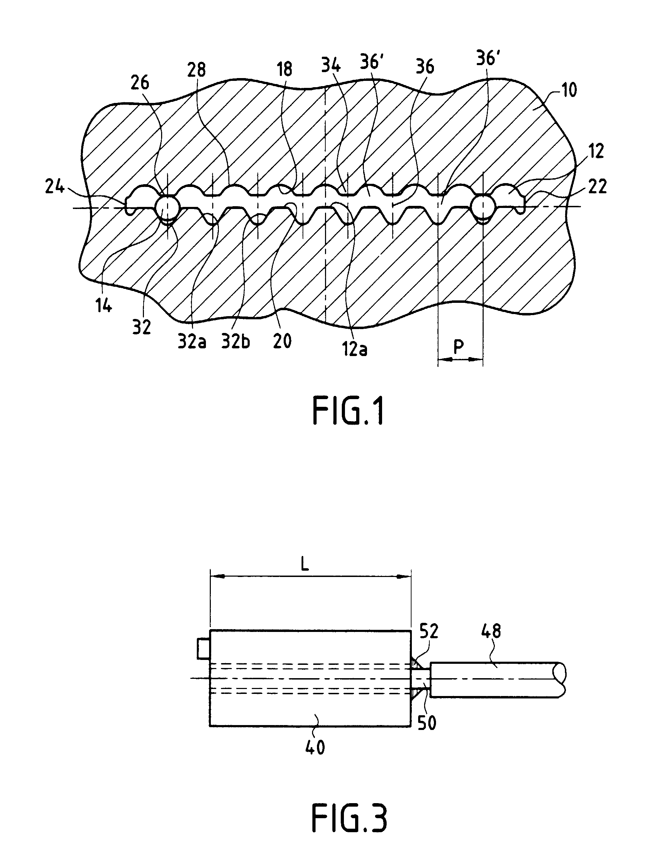

En se référant tout d'abord à la figure 1, on va décrire le principe du dispositif de positionnement de fibres optiques selon l'invention. Ce dispositif est constitué par un corps monobloc 10 dans lequel est ménagé un évidement longitudinal 12 apte à recevoir et positionner les extrémités des fibres optiques 14 par exemple d'un faisceau ruban de fibres optiques. L'évidement 12 présente une paroi interne fermée 12a dont la section droite est une courbe fermée représentée sur la figure 1. L'évidement complet présente une paroi interne 12a qui a la forme d'une surface cylindrique fermée dont les génératrices sont perpendiculaires au plan de la figure 1 et dont la directrice a la forme représentée sur la figure 1. Plus précisément, la section droite de l'évidement 12 est constituée par un premier côté 18 et un deuxième côté 20 qui sont sensiblement parallèles entre eux, ces côtés étant raccordés par des portions terminales 22 et 24 pour constituer ainsi une courbe fermée. Comme le montre la figure 1, les côtés 18 et 20 de la section droite sont en fait constitués chacun par une courbe ondulée en forme de vagues présentant une alternance de reliefs 26 et de creux 28 pour le côté supérieur 18 et de reliefs 30 et de creux 32 pour le côté 20. Les ondulations du côté 20 présentent des portions en creux 32 qui sont définies sensiblement par deux segments 32a et 32b définissant un triangle isocèle. En revanche, dans un mode préféré de réalisation, les reliefs 26 du côté 18 présentent une partie légèrement aplatie 34. Globalement, les vagues du côté supérieur 18 sont en opposition de phase avec les vagues du côté inférieur 20. Ainsi, les côtés 32a et 32b d'un creux du côté 20 coopérant avec l'extrémité 34 d'un relief du côté 18 définissent un volume longitudinal portant la référence générique 36 dont les dimensions correspondent au diamètre d'une fibre optique 14. En revanche, si l'on considère le volume longitudinal 36' défini par un creux 28 du premier côté 18 et une crête 30 du deuxième côté 20, ses dimensions sont insuffisantes pour recevoir une fibre. En d'autres termes, si l'on considère la section droite de l'évidement 12, elle est constituée par une alternance d'espaces 36 aptes à recevoir une fibre et d'espaces 36' qui ne peuvent pas recevoir une fibre. Ainsi, entre ces trois portions de surface, on réalise un positionnement qui peut être assez précis de l'extrémité d'une fibre optique 14 à l'intérieur de l'évidement 12. Ces trois portions de surface définissent, en section, trois points de contact pour la fibre. Le pas p entre deux creux 32 du côté inférieur 20 correspond à l'écartement voulu entre deux fibres optiques adjacentes.

Du fait que l'évidement 12 à réaliser dans le corps 10 est limité par une paroi interne en forme de surface cylindrique fermée, on peut réaliser le dispositif de positionnement par une technique d'extrusion ou de moulage d'un matériau plastique convenable ou d'un matériau métallique, ce qui permet d'obtenir un coût de fabrication réduit.

On pourrait également prévoir que, par exemple, le côté supérieur 18 de la section droite de l'évidement 12 soit constitué par une portion rectiligne correspondant aux extrémités aplaties 34 des parties en relief. On obtiendrait encore la définition des volumes élémentaires individuels 36 aptes à recevoir chaque fibre optique. On comprend cependant que le noyau d'extrusion aurait alors des dimensions plus réduites et sa réalisation serait donc plus délicate. En revanche, dans le mode de réalisation préféré représenté sur la figure 1, le logement 12 a une épaisseur sensiblement constante entre les côtés 18 et 20, ce qui permet d'utiliser un noyau d'extrusion de forme mieux adaptée.

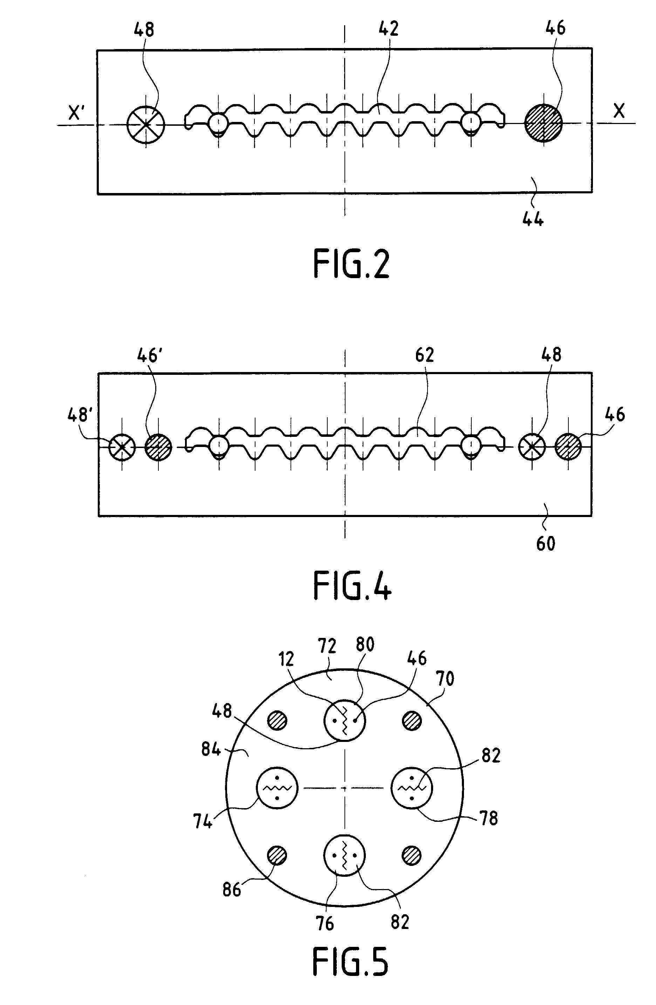

Sur les figures 2 et 3, on a représenté un premier exemple de réalisation d'un élément de connecteur optique utilisant le dispositif de positionnement décrit en liaison avec la figure 1. Cet élément de connecteur comporte un corps 40 de forme parallélépipédique rectangle et qui présente donc un évidement 42 disposé dans un plan médian XX', l'évidement 42 s'étendant sur toute la longueur L du corps de l'élément de connecteur. L'évidement 42 a la forme représenté sur la figure 1.

Sur la figure 2, on a représenté dans la face avant 44 de l'élément de connecteur un pion 46 et un trou 48 permettant le positionnement de l'élément de connecteur avec un autre élément de connecteur. Sur la figure 3, on a représenté schématiquement un faisceau de fibres optiques en ruban 48 ainsi que les extrémités des fibres optiques 50 qui ont été dénudées de leur gaine isolante, ces extrémités dénudées 50 des fibres optiques étant introduites dans les volumes de positionnement 36 de l'évidement 42. On a représenté également schématiquement un dépôt de matériau adhésif 52 permettant d'assurer la solidarisation entre les fibres optiques et l'élément de connecteur 40. On pourrait également prévoir une pièce mécanique de blocage des fibres optiques dans l'évidement par coincement.

La figure 4 représente une variante de réalisation d'élément de connecteur 60 qui comporte un évidement longitudinal 62 identique à celui de la figure 2, mais dans lequel l'élément de connecteur comporte deux pions de centrage 46 et 46' et deux trous de centrage 48 et 48'. On comprend ainsi que les deux éléments de connecteur destinés à être associés sont strictement identiques.

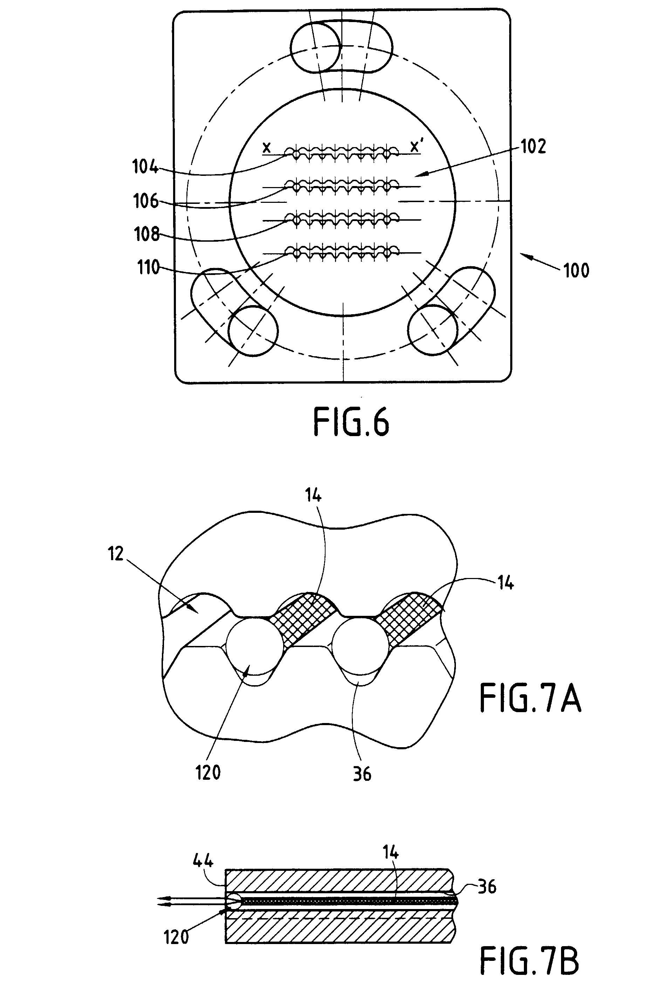

Dans le mode de réalisation du connecteur de la figure 5, celui-ci comporte un capot cylindrique 70 muni d'un isolant interne 72 formant bâti qui définit quatre logements cylindriques ou tronconiques 74, 76, 78 et 80 disposés selon quatre rayons à 90 degrés du bâti isolant 72, chacun de ces logements étant apte à recevoir avec un certain jeu un élément de connexion du type représenté sur la figure 2 mais présentant un corps cylindrique ou tronconique. Chaque élément de connexion individuel qui porte la référence 82 est donc monté "flottant" dans le logement associé. La face d'extrémité 84 de l'élément de connecteur est munie de deux pions de repérage et de positionnement 86 pour leur positionnement par rapport à l'autre élément de connecteur. Chaque élément de connecteur unitaire 82 comporte lui-même un pion de positionnement 46 et un trou de positionnement 48 comme cela est représenté sur la figure 2. Lors de l'accouplement de deux éléments de connecteur du type représenté sur la figure 5, on a donc d'une part un positionnement global des deux éléments de connecteur et un positionnement relatif de chaque connecteur élémentaire 82 d'un élément de connecteur par rapport au connecteur élémentaire 82 de l'autre élément de connecteur.

Cette disposition est particulièrement intéressante car le bâti 72 avec ses logements cylindriques est identique au corps isolant qui est utilisé dans un connecteur électrique. Il serait donc possible de réaliser un élément de connecteur mixte dans lequel deux logements seraient occupés par un contact électrique et deux logements occupés par un élément de connexion élémentaire optique.

L'élément de connecteur 100 représenté sur la figure 6 comporte un corps 102 monobloc qui est percé de quatre évidements 104, 106, 108 et 110 identiques à celui qui est représenté sur la figure 1. Les plans médians XX' des évidements sont parallèles entre eux. Chaque évidement peut recevoir les fibres optiques d'un faisceau ruban de fibres optiques.

Les figures 7a et 7b montrent une variante de réalisation d'un élément de connecteur représenté sur les figures 2 et 3. Dans ce mode de réalisation, chaque volume 36 de l'évidement 12 destiné à recevoir une fibre optique 14 est muni à proximité de la face de connexion 44 d'une lentille optique 120 fixée dans ledit volume. Les lentilles sont de préférence réalisées à l'aide d'une microbille en matériau transparent.

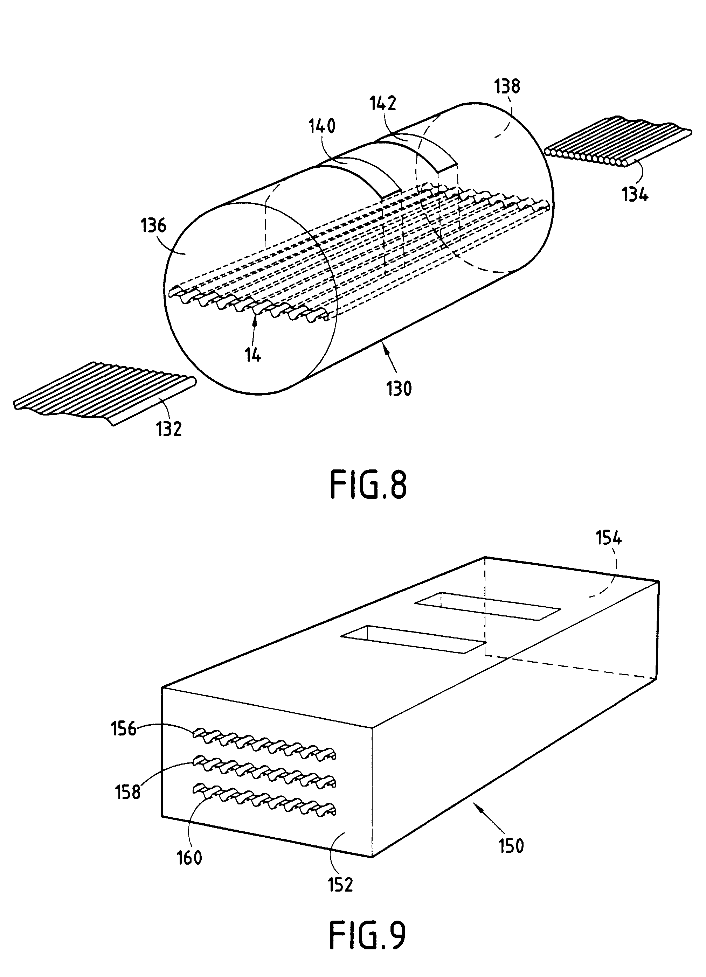

La figure 8 illustre l'utilisation du dispositif de positionnement monobloc de la figure 1 pour réaliser un bloc d'épissurage 130 de deux faisceaux "ruban" 132 et 134 de fibres optiques. Le corps monobloc 130 est percé d'un évidement 12 qui a la forme représentée sur la figure 1 et qui s'étend entre les deux faces d'extrémité 136 et 138 du bloc d'épissurage. Une extrémité de chaque faisceau 132 et 134 est introduite dans l'évidement 12. Des fentes 140, 142 permettent d'introduire des moyens de solidarisation des extrémités des faisceaux. Ainsi, l'extrémité de chaque fibre optique d'un faisceau est exactement en regard de la fibre correspondante de l'autre faisceau.

La figure 9 montre une variante de réalisation du bloc d'épissurage de la figure 8. Le corps 150 est percé de n évidements parallèles entre eux qui s'étendent entre les deux faces 152 et 154 du corps 150. Dans le cas de la figure 9, on trouve trois évidements 156, 158 et 160 qui permettent ainsi de raccorder trois paires de faisceaux.

Il faut également souligner que les fibres optiques peuvent être immobilisées dans l'évidement par un moyen mécanique assurant un coincement des fibres. On peut, par exemple, déformer légèrement la face postérieure du corps au niveau de l'évidement pour assurer ce coincement.

## Revendications

1. Dispositif de positionnement de précision de l'extrémité de fibres optiques en faisceau , caractérisé en ce qu'il comprend un corps massif monobloc allongé, dans lequel est percé un évidement le traversant de part en part selon le sens de la longueur, la section dudit évidement dans des plans perpendiculaires à la longueur étant une courbe fermée comprenant un premier côté et un deuxième côté s'étendant sensiblement parallèlement l'un à l'autre, au moins un desdits côtés ayant la forme d'une ondulation constituée par une alternance de crêtes, et de creux, l'espace limité par un creux et la partie de l'autre côté qui lui fait face étant apte à recevoir une fibre avec un faible jeu, les espaces correspondants à une crête n'étant pas aptes à recevoir une fibre.

2. Dispositif selon la revendication 1, caractérisé en ce que le deuxième côté de la section droite de l'évidement est également constitué par une alternance de crêtes et de creux dans laquelle les creux du premier côté sont en regard des crêtes du deuxième côté, l'espace correspondant à un creux du premier côté étant apte à recevoir une fibre, l'espace correspondant à une crête du premier côté n'étant pas apte à recevoir une fibre.

3. Dispositif de positionnement selon l'une quelconque des revendications 1 et 2, caractérisé en ce que, dans une section droite de l'évidement, les flancs d'un creux du premier côté et le sommet d'une crête correspondante du deuxième côté définissent trois points de contact pour la fibre optique.

4. Application du dispositif de positionnement selon l'une quelconque des revendications 1 à 3, à la réalisation d'un élément de connecteur optique, caractérisée en ce que ledit corps présente une face de connexion avec un autre élément de connecteur, et en ce que ladite face est munie de moyen de positionnement par rapport à l'autre élément de connecteur.

5. Application selon la revendication 4, caractérisée en ce que ledit corps comprend une pluralité d'évidements sensiblement identiques disposés parallèlement les uns aux autres.

6. Application selon la revendication 4, caractérisée en ce que ledit connecteur comprend un bâti percé d'une pluralité de logements cylindriques ou tronconiques parallèles entre eux et débouchant dans la face de connexion et en ce que ledit connecteur comprend en outre une pluralité de dispositifs de positionnement selon l'une quelconque des revendications 1 à 3, chaque dispositif ayant un corps cylindrique et étant monté avec jeu dans un desdits logements.

7. Application selon l'une quelconque des revendications 4 à 6, caractérisée en ce qu'à proximité de la face de connexion, l'espace limité par un creux du premier côté d'un évidement et la partie de l'autre côté lui faisant face est muni d'une lentille optique.

8. Application du dispositif de positionnement selon l'une quelconque des revendications 1 à 3, à la réalisation d'un bloc d'épissure entre au moins deux rubans de fibres optiques, caractérisée en ce que ledit corps comprend des première et deuxième faces d'extrémité dans lesquelles débouche ledit évidement.

9. Application selon l'une quelconque des revendications 4 à 7, caractérisée en ce que lesdits moyens de positionnement comprennent au moins un doigt de positionnement engagé dans un espace de l'évidement.

10. Application selon l'une quelconque des revendications 4 à 9, caractérisée en ce que le corps est réalisé par moulage d'un matériau plastique ou métallique.

11. Application selon l'une quelconque des revendications 4 à 9, caractérisée en ce que le corps est réalisé par extrusion d'un matériau plastique ou métallique.

12. Application selon l'une quelconque des revendications 4 à 11, caractérisée en ce que les fibres optiques sont immobilisées dans l'évidement par coincement mécanique.

13. Dispositif selon l'une quelconque des revendications 1 à 3, caractérisé en ce que le corps est réalisé par moulage d'un matériau plastique ou métallique.

14. Dispositif selon l'une quelconque des revendications 1 à 3, caractérisé en ce que le corps est réalisé par extrusion d'un matériau plastique ou métallique.
